# EUROPEAN PATENT APPLICATION

(11) **EP 1 873 444 A1**
(43) Date of publication of application: **02.01.2008**
(21) Application number: 05806802.4
(22) Date of filing: 18.11.2005
(51) Int. Cl.: F21V 8/00, G02F 1/13357, G02B 6/00, F21Y 101/02

(54) **PLANAR LIGHTING APPARATUS**

(30) Priority: 28.03.2005 JP 2005091358
(71) Applicant: Minebea Co. Ltd., Kitasaku-gun, Nagano 389-0293 (JP)
(72) Inventor: OHNO, Yasuo, Minebea Co., Ltd., Kitasaku-gun, Nagano 389-0293 (JP)
(74) Representative: Schaad, Balass, Menzl & Partner AG
(86) International application number: PCT/JP2005/021255
(87) International publication number: WO 2006/103803

(57) **Abstract**

Luminance of a planar lighting apparatus is increased by improving adhesiveness between a light emitting plane of an LED and a side end plane of a light guide plate. The planar lighting apparatus (20) is provided with the light guide plate (2), and the LED (10) arranged on a light incoming plane (3) which is a side end plane of the light guide plate (2). The light emitting plane (15) of the LED (10) is provided with a recessed section (14a) formed of a surface of a translucent resin for sealing. On the light incoming plane (3) of the light guide plate (2), a protruding section (3a) following the shape of the recessed section (14a) of the LED (10) is integrally formed. In the LED (10), the recessed section (14a) is complemented by the protruding section (3a), and the actual light emitting plane (15) including the recessed section (14a) and the light incoming plane (3) of the light guide plate (2) in the LED (10) are arranged to be closely adhered without having a space in between. Thus, use efficiency of outgoing light from the LED (10) is improved.

## Description

### Technical Field

The present invention relates to a side-light-type planar lighting apparatus and particularly to a planar lighting apparatus used as illuminating means of a liquid crystal display device.

### Background Art

Liquid crystal display devices are widely used in display means or the like of electronic equipment at present but since such liquid crystal display devices are not self-luminous, illuminating means for ensuring visibility at night and in dark places are needed. A planar lighting apparatus has been used as such illuminating means.

As a type of such a planar lighting apparatus, a side-light-type planar lighting apparatus is widely used. Such a side-light-type planar lighting apparatus comprises a light guide plate with light transmittance, a rod-state light source arranged on a side end face of the light guide plate or one or more point-like light source as basic elements. As a recent trend, in accordance with an increase in the number of applications of planar lighting apparatuses to small-sized electronic equipment such as personal digital assistants, a planar lighting apparatus of the type provided with a point-like light source capable of simplification of a driving circuit is used, and a white LED (hereinafter also referred to simply as an LED) is frequently used as a point-like light source.

In the above side-light-type planar lighting apparatus, in order to improve use efficiency of outgoing light from the LED and to promote higher brightness of the planar lighting apparatus, the LED is preferably arranged so as to be in close contact with the side end face of the light guide plate (hereinafter, the side end face of the light guide plate on which the LED is arranged is also referred to as incoming-light face). In this regard, a planar lighting apparatus in which the circuit board on which the LED is mounted is affixed to a major face side of the light guide plate with double-sided adhesive tape or the like and a face of the LED opposite the incoming-light face of the light guide plate (hereinafter also referred to as a light-emitting face) is maintained in close contact with the incoming-light face of the light guide plate by a frame-body holding portion integrally formed on the light guide plate has been proposed (See Patent Document 1, for example).

Patent Document 1: Japanese Unexamined Patent Application Publication No. 2004-213943

### Disclosure of Invention

### Problems to be Solved by the Invention

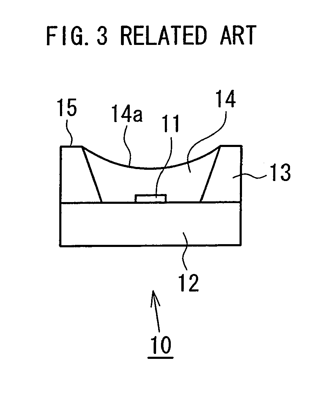

On the other hand, as shown in Fig. 3, an LED 10 typically has an LED chip 11 electrically connected to an electrode pattern, not shown, mounted on a board 12 and a lamp house 13 provided around the LED chip 11, and the LED chip 11 is sealed by a translucent resin 14 such as an epoxy resin, silicon resin and the like. This sealing process is usually carried out by filling the liquid-state translucent resin 14 in the lamp house 13 and heating and hardening it, and in this type of LED 10, the surface of the translucent resin 14 after hardening has a recessed shape with its center indented in many cases. Therefore, in the conventional planar lighting apparatus as described in Patent Document 1, for example, there is a problem that even if the light-emitting face side of the LED 10 is arranged in close contact with the incoming-light face of the light guide plate, a gap by a recess portion 14a formed on the surface of the translucent resin 14 exists between an actual light-emitting face 15 of the LED 10 and the incoming-light face of the light guide plate, by which use efficiency of the outgoing light from the LED is lowered.

The present invention was made in view of the above problem and has an object to promote higher brightness of the planar lighting apparatus by improving close contact between the light-emitting face of the LED and the side end face of the light guide plate or by adjusting a gap shape between the light-emitting face of the LED and the side end face of the light guide plate.

### Means for Solving the Problems

In order to solve the above problem, in a planar lighting apparatus according to the present invention provided with a light guide plate and an LED arranged on a side end face of the light guide plate, the LED has a recess portion on its light-emitting face; and the light guide plate has a projection portion formed correspondent to the shape of the recess portion on a side end face opposite the light-emitting face of the LED.

According to the planar lighting apparatus according to the present invention, since the projection portion correspondent to the shape of the recess portion provided at the light-emitting face of the LED is formed on the side end face of the light guide plate opposite the light-emitting face of the LED, the recess portion is complemented by the projection portion when the LED is arranged on the side end face of the light guide plate, and a gap between the actual light-emitting face of the LED and the side end face of the light guide plate can be eliminated or minimized, by which occurrence of lost light such as reflection by an air layer can be reduced and use efficiency of outgoing light from the LED can be improved.

Also, in a mode of the present invention, the light guide plate includes a light guide plate body and an incoming light portion arranged on the side end face of the light guide plate body and opposed to the LED, and the incoming light portion has a projection portion formed correspondent to the shape of the recess portion on the side end face opposite the light-emitting face of the LED. On either of the side end face of the incoming light portion opposite the light guide plate body or the side end face of the light guide plate body opposite the incoming light portion, a prism row made of a plurality of projecting streaks or recess streaks extending in the thickness direction of the light guide plate is formed.

In the light guide plate according to the present invention, the incoming light portion on which the LED is arranged and the light guide plate body are configured separately, and the prism row is provided on the face forming a connection portion between the incoming light portion and the light guide plate body so that light emitting distribution after light enters the light guide plate body via the prism row can be made uniform. Thus, a difference in lights and darks between a region immediately before the LED and a region on the sides thereof occurring in the vicinity of the incoming light portion can be solved and appearance can be improved.

### Advantages of the Invention

Since the present invention is configured as above, the use efficiency of the outgoing light from the LED can be improved by improvement of close contact between the light-emitting face of the LED and the side end face of the light guide plate or adjustment of the gap shape between the light-emitting face of the LED and the side end face of the light guide plate, which contributes to higher brightness of the planar lighting apparatus.

### Brief Description of the Drawings

Fig. 1 is a horizontal sectional view illustrating an essential part of a planar lighting apparatus in a first embodiment of the present invention;
Fig. 2 is a horizontal sectional view illustrating an essential part of a planar lighting apparatus in a second embodiment of the present invention; and
Fig. 3 is a sectional view illustrating configuration of a typical LED used in a planar lighting apparatus.

### Reference Numerals

2, 22: Light guide plate
3, 26: Light-incoming face
3a, 26a: Projection portion
10: LED
23: Light guide plate body
25: Light incoming portion
28: Prism row

### Best Mode for Carrying Out the Invention

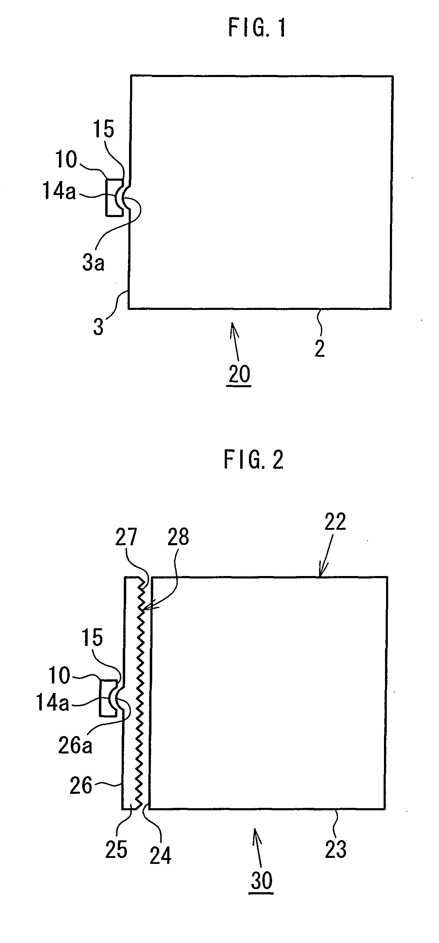

An embodiment of the present invention will be described below with reference to the attached drawings, in which Figs. 1 and 2 are for explanation and do not necessarily reflect actual shapes and dimensions accurately.

Figs. 1 and 2 are horizontal sectional views illustrating an essential part of a planar lighting apparatus in first and second embodiments of the present invention in an exploded manner, respectively. In the following explanation, an LED used in the illustrated planar lighting apparatus is the same as an LED 10 shown in Fig. 3, and description and illustration of the configuration details will be omitted as appropriate.

A planar lighting apparatus 20 shown in Fig. 1 comprises a substantially rectangular light guide plate 2 and the LED 10 arranged on a incoming-light face 3, which is a side end face of the light guide plate 2. A light-emitting face 15 of the LED 10 has, as mentioned above by referring to Fig. 3, a recess portion 14a formed on the surface of a translucent resin for sealing. The light guide plate 2 is a plate-like light guide body formed preferably by injection molding of a translucent resin such as acrylic resin, polycarbonate resin, amorphous polyolefin resin and the like, and a projection portion 3a correspondent to the shape of the recess portion 14a of the LED 10 is integrally formed on the incoming-light face 3 of the light guide plate 2.

In this embodiment, the projection portion 3a formed on the incoming-light face 3 of the light guide plate 2 is formed as a spherical face with a projecting height from the incoming-light face 3 substantially matching the depth of the recess portion 14a of the LED 10, and in the planar lighting apparatus 20, the LED 10 has the recess portion 14a complemented by the projection portion 3a so that the actual light-emitting face 15 including the recess portion 14a of the LED 10 and the incoming-light face 3 of the light guide plate 2 are arranged in close contact without having a gap between them.

With this configuration, in the planar lighting apparatus 20, generation of reflected light by the air layer existing between the light-emitting face 15 of the LED 10 and the incoming-light face 3 of the light guide plate 2 is restricted to a minimum, the outgoing light from the LED 10 is made to enter the light guide plate 2 efficiently, and higher brightness of the planar lighting apparatus 20 can be achieved. According to an experiment, in the planar lighting apparatus 20 in this embodiment, it is confirmed that brightness improvement of approximately 5% can be obtained as compared with a conventional planar lighting apparatus not having the projection portion 3a.

Here, in the present invention, the shape of a curved face constituting the projection portion 3a and dimensions such as the projecting height from the incoming-light face 3 do not have to completely match the shape and the dimensions of the recess portion 14a of a specific LED to be used but may be an arbitrarily appropriate shape and dimensions selected in terms of design, considering manufacturability based on measurement of a plurality of LEDs 10.

Next, referring to Fig. 2, the planar lighting apparatus of a second embodiment of the present invention will be described. In the following description, explanation for portions duplicated with the above-mentioned first embodiment will be omitted.

In a planar lighting apparatus 30 shown in Fig. 2, a light guide plate 22 comprises a light guide plate body 23 and an incoming light portion 25, and by arranging the light guide plate body 23 and the incoming light portion 25 with their respective opposing side end faces 24, 27 in close contact, they are optically bonded so as to form a single light guide plate 22.

Also, the light guide plate body 23 and the incoming light portion 25 are formed of materials and by methods similar to those of the light guide plate 2 in the above-mentioned first embodiment, and the LED 10 is arranged with a projection portion 26a correspondent to the shape of the recess portion 14a of the LED 10 formed on a incoming-light face 26, which is a side end face of a substantially prism-shaped incoming light portion 25. The substantially rectangular light guide plate body 23 functions as a major planar light source of the planar lighting apparatus 30. With this configuration, the planar lighting apparatus 30 in this embodiment obtains the same functions and effects as the planar lighting apparatus 20 in the above-mentioned first embodiment.

Moreover, since in the planar lighting apparatus 30, a prism row 28 comprising a plurality of triangular prisms extending in the thickness direction of the light guide plate 22 (perpendicular to the face of the figure) is formed on a side end face 27 of the incoming light portion 25 opposite the light guide plate body 23, by which light incident to the incoming light portion 25 from the LED 10 is diffused, the difference in light between a region immediately before the LED and a region on the sides thereof is solved, and appearance of the light guide plate body 23 is improved.

In the planar lighting apparatus 30 shown in Fig. 2, the prism row 28 is formed on the side end face 27 in the incoming light portion 25 opposite the light guide plate body 23, but a similar prism row may be formed on the side end face 24 opposite the incoming light portion 25 of the light guide plate body 23. Moreover, the prism row 28 according to the present invention is not limited to those comprising triangular prisms shown in Fig. 2 but may include a case containing a projecting streak or a recess streak having an arbitrary sectional shape.

Formation of the prism row 28 in a flat face as the side end face 27 of the incoming light portion 25 opposite the light guide plate body 23 or the side end face 24 of the light guide plate body 23 opposite the incoming light portion 25 as above is advantageous in terms of manufacturability such as die machining, but in the planar lighting apparatuses 20, 30 shown in Figs. 1 and 2, the prism row may be formed on the surface of the projection portions 3a, 26a, by which the outgoing light from the LED 10 is diffused. Also, the present invention includes a case where a plurality of projection portions are formed on the incoming-light face of the light guide plate and a plurality of corresponding LEDs are arranged.

## Claims

1. A planar lighting apparatus provided with a light guide plate and an LED arranged on a side end face of the light guide plate,
**characterized in that**
the LED has a recess portion on its light-emitting face; and the light guide plate has a projection portion formed correspondent to the shape of the recess portion on a side end face opposite the light-emitting face of the LED.

2. The planar lighting apparatus according to claim 1, wherein the light guide plate includes a light guide plate body and an incoming light portion arranged on a side end face of the light guide plate body opposite the LED, the incoming light portion has a projection portion formed correspondent to the shape of the recess portion on a side end face opposite the light-emitting face of the LED, and on either of the side end face of the incoming light portion opposite the light guide plate body or the side end face of the light guide plate body opposite the incoming light portion, a prism row made of a plurality of projecting streaks or recess streaks extending in the thickness direction of the light guide plate is formed.
